# EUROPEAN PATENT APPLICATION

(11) **EP 4 485 273 A1**
(43) Date of publication of application: **01.01.2025**
(21) Application number: 23794961.5
(22) Date of filing: 03.04.2023
(51) Int. Cl.: G06N 3/04

(54) **BEAM MEASUREMENT PARAMETER FEEDBACK METHOD AND DEVICE AND RECEIVING METHOD AND DEVICE**

(30) Priority: 29.04.2022 CN 202210468885
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); WU, Hao, Shenzhen, Guangdong 518057 (CN); LIU, Wenfeng, Shenzhen, Guangdong 518057 (CN); ZHANG, Jiayi, Shenzhen, Guangdong 518057 (CN)
(74) Representative: Deambrogi, Edgardo
(86) International application number: PCT/CN2023/086022
(87) International publication number: WO 2023/207526

(57) **Abstract**

Provided are a beam measurement parameter feedback and a receiving method, and an apparatus. The method includes: obtaining a beam measurement parameter set, where the beam measurement parameter set is used for determining a beam measurement parameter array corresponding to a neural network, the beam measurement parameter set includes N elements, the beam measurement parameter array includes M elements, N and M are positive integers greater than 1, and M is less than or equal to N; and feeding back the beam measurement parameter set.

## Description

### Cross-Reference to Related Application

This disclosure claims the benefit of priority of Chinese patent application No. CN202210468885.2, entitled "BEAM MEASUREMENT PARAMETER FEEDBACK METHOD AND DEVICE AND RECEIVING METHOD AND DEVICE", filed on April 29, 2022, the entire contents of which are incorporated herein by reference.

### Technical Field

Embodiments of the present disclosure relate to the field of communication, and particularly relate to a beam measurement parameter feedback and receiving method, and apparatuses.

### Background

Currently, artificial intelligence (Al), especially deep learning-based artificial intelligence, has exceptional capabilities in feature extraction, analysis, and induction, and is being widely applied in various aspects of our lives and production. Integrating it deeply with a wireless communication system can enhance the performance of the wireless communication system. The content of researches includes, but is not limited to, applications such as channel state information (CSI) feedback, beam management, channel estimation, position, interference management, user scheduling, and power control. For example, beam management is mainly divided into several aspects including beam scanning, beam tracking, and beam recovery. The problem to be solved is about how to obtain accurate beam pairs with minimal control overhead. Existing technical standards do not specify a generation method used by a terminal for beam receiving or transmitting (including beam direction information, beam width, etc.), and a base station is unaware of relevant information. In Al-based beam management, neural network parameters corresponding to AI are trained according to a plurality of sets of certain data and labels, an element in each set of data corresponds to a beam pair, and different beam orders or counts cause different input data, and therefore beam sorting significantly impacts Al-based beam management. For example, if different terminals interpret beam orders differently, the effect of AI beam scanning will be affected.

### Summary

Embodiments of the present disclosure provide a beam measurement parameter feedback method, a beam measurement parameter receiving method, and apparatuses to at least solve the problem that different beam orders affect Al-based beam management in the related art.

According to an embodiment of the present disclosure, a beam measurement parameter feedback method is provided, and includes: obtaining a beam measurement parameter set, where the beam measurement parameter set is used for determining a beam measurement parameter array corresponding to a neural network, the beam measurement parameter set includes N elements, the beam measurement parameter array includes M elements, N and M are positive integers greater than 1, and M is less than or equal to N; and feeding back the beam measurement parameter set.

According to another embodiment of the present disclosure, a beam measurement parameter receiving method is provided. The method includes: receiving a beam measurement parameter set; and determining, according to the beam measurement parameter set and a neural network, a beam measurement parameter array corresponding to the neural network, where the beam measurement parameter set includes N elements, the beam measurement parameter array includes M elements, N and M are integers greater than 1, and M is less than or equal to N.

According to another embodiment of the present disclosure, a beam measurement parameter feedback apparatus is provided and located at a first communication node. The apparatus includes: an obtaining module, configured to obtain a beam measurement parameter set, where the beam measurement parameter set is used for determining a beam measurement parameter array corresponding to a neural network, the beam measurement parameter set includes N elements, the beam measurement parameter array includes M elements, N and M are positive integers greater than 1, and M is less than or equal to N; and a feedback module, configured to feed back the beam measurement parameter set.

According to another embodiment of the present disclosure, a beam measurement parameter receiving apparatus is provided and located at a second communication node. The apparatus includes: a receiving module, configured to receive a beam measurement parameter set; and a determine module, configured to determine, according to the beam measurement parameter set and a neural network, a beam measurement parameter array corresponding to the neural network, where the beam measurement parameter set includes N elements, the beam measurement parameter array includes M elements, N and M are integers greater than 1, and M is less than or equal to N.

According to another embodiment of the present disclosure, a computer-readable storage medium is further provided, and has a computer program stored therein, where the computer program is configured to perform the steps in any above method embodiment during operation.

According to another embodiment of the present disclosure, an electronic apparatus is further provided, and includes a memory and a processor. The memory has a computer program stored therein, and the processor is configured to operate the computer program so as to perform the steps in any above method embodiment.

### Brief Description of the Drawings

Fig. 1 is a schematic diagram of a network architecture in which a method embodiment of the present disclosure is operated;
Fig. 2 is a structural schematic diagram of a base station or terminal according to an embodiment of the present disclosure;
Fig. 3 is a flowchart of a beam measurement parameter feedback method according to an embodiment of the present disclosure;
Fig. 4 is a flowchart of a beam measurement parameter receiving method according to an embodiment of the present disclosure;
Fig. 5 is a structural block diagram of a beam measurement parameter feedback apparatus according to an embodiment of the present disclosure; and
Fig. 6 is a structural block diagram of a beam measurement parameter receiving apparatus according to an embodiment of the present disclosure.

### Detailed Description of the Embodiments

Embodiments of the present disclosure are described in detail with reference to the accompanying drawings and in conjunction with the embodiments as below.

It should be noted that the terms such as "first" and "second" of the specification and claims of the present disclosure and the foregoing accompanying drawings are used to distinguish similar objects but are not necessarily intended to describe specific sequences or precedence orders.

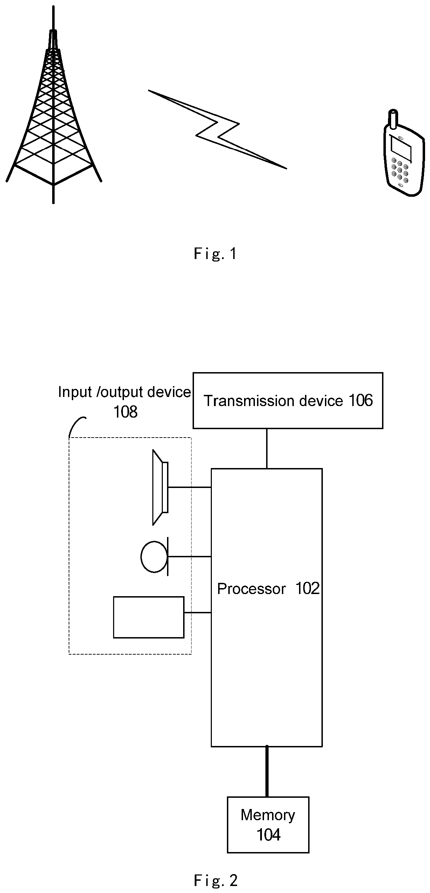

The technical solution provided by the embodiments of the present disclosure may be operated within a network architecture of a mobile communication network described in Fig. 1. In the embodiments of the present disclosure, the network architecture of the mobile communication network (including but not limited to 3G, 4G,or 5G, and future mobile communication networks) may include a network-side device (e.g., including but not limited to a base station) and a receiving-side device (e.g., including but not limited to a terminal). It should be understood that in this example, in a downlink, a first communication node (also referred to as a first communication node device) may be a base station-side device, and a second communication node (also referred to as a second communication node device) may be a terminal-side device. Of course, in an uplink, the first communication node may also be a terminal-side device, and the second communication node may also be a base station-side device. In device-to-device communication between the two communication nodes, both the first communication node and the second communication node may be base stations or terminals.

In the embodiments of the present disclosure, the base station may be an evolutional node B (eNB or eNodeB) in long term evolution (LTE) and long term evolution advanced (LTEA), a base station device in a 5G network, or a base station in a future communication system, etc. The base station may include various network-side devices, such as various macro base stations, micro base stations, home base stations, radio remote units, routers, wireless fidelity (WIFI) devices, or primary cells, and secondary cells. A location management function (LMF) device is also included.

In the embodiments of the present disclosure, the terminal is a device with a wireless receiving and transmitting function, which may be deployed on land, including indoors or outdoors, handheld, wearable, or vehicle-mounted; may also be deployed on water surfaces (e.g., a ship); and may also be deployed in the air (e.g., an airplane, a balloon, and a satellite.). The terminal may be a mobile phone, a Pad, a computer with a wireless receiving and transmitting function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of this application do not limit application scenarios. The terminal may be sometimes referred to as a user, user equipment (UE), an access terminal, a UE unit, a UE station, a mobile station, a mobile platform, a remote station, a remote terminal, a mobile device, a UE terminal, a wireless communication device, a UE proxy, or a UE apparatus, etc. The embodiments of this application do not impose limitations.

The method embodiments provided by the embodiments of this application may be performed in a base station, a mobile terminal, a computer terminal, or similar arithmetic units. Taking operation on the mobile terminal as an example, Fig. 2 is a block diagram of a hardware structure of a mobile terminal operated according to an embodiment of the present disclosure. As shown in Fig. 2, the mobile terminal may include one or more (only one is shown in Fig. 2) processors 102 (the processor 102 may include, but is not limited to, a processing unit such as a microcontroller unit (MCU) or a field programmable gate array (FPGA) and a memory 104 configured to store data, where the mobile terminal may also include a transmission device 106 for a communication function and an input and output device 108. Those of ordinary skill in the art can understand that the structure shown in Fig. 2 is merely illustrative, and does not limit the structure of the above mobile terminal. For example, the mobile terminal may further include more or fewer components than those shown in Fig. 2, or have a different configuration than that shown in Fig. 2.

The memory 104 may be configured to store computer programs, such as software programs and modules of application software and computer programs corresponding to the method in the embodiments of the present disclosure. The processor 102 performs various functional applications and data processing by operating the computer programs stored in the memory 104, thereby implementing the above method. The memory 104 may include a high-speed random access memory, and may also include a non-volatile memory, such as one or more magnetic storage apparatuses, a flash memory, or another nonvolatile solid-state memory. In some examples, the memory 104 may further include memories which are remotely set relative to the processor102, and these remote memories may be connected to the mobile terminal through networks. The examples of the above networks include, but are not limited to, an Internet, an intranet, a local area network, a mobile communication network, and a combination thereof.

The transmission device 106 is configured to receive or transmit data through a network. A specific example of the above networks may include a wireless network provided by a communication supplier of the mobile terminal. In an example, the transmission device 106 includes a network interface controller (NIC) which may be connected with other network devices through a base station so as to communicate with the Internet. In an example, the transmission device 106 may be a radio frequency (RF) module configured to communicate with the Internet in a wireless manner.

It should be noted that when the method embodiments of the present disclosure run on the base station, the base station may also include the various components in the aforementioned mobile terminal, such as the processor, the memory, and the input and output device.

In the embodiments of the present disclosure, high-layer signaling includes, but is not limited to, radio resource control (RRC) and media access control control element (MAC CE). Physical layer signaling may also be transmitted between the base station and the terminal. For example, the physical layer signaling is transmitted on a physical downlink control channel (PDCCH) in the downlink, and is transmitted on a physical uplink control channel (PUCCH) and a physical random-access channel (PRACH) in the uplink.

In the embodiments of the present disclosure, transmission includes transmitting or receiving, such as transmitting or receiving data, and transmitting or receiving signals.

In the embodiments of the present disclosure, indicators for various parameters may also be referred to as indexes or identifiers (IDs), which are completely equivalent concepts. Taking a resource identifier for a wireless system as an example, wireless system resources include, but are not limited to, one of the following: indexes corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of one or a group of resources to the terminal through various high-layer signaling or physical layer signaling.

In some embodiments, to calculate channel state information or beam measurement parameters, the base station or user needs to transmit a reference signal (RS). A reference channel includes, but is not limited to, a channel-state information reference signal (CSI-RS), which includes zero power CSI-RS (ZP CSI-RS) and non-zero power CSI-RS (NZP CSI-RS), a channel-state information-interference measurement (CSI-IM) signal, and a sounding reference signal (SRS). NZP CSI-RS may be used to measure the channel or interference. CSI-RS may also be used for tracking, which is called CSI-RS for tracking (TRS). CSI-IM is generally used to measure interference, while SRS is used for channel estimation. A synchronization signal (SS), a synchronization signals block (SSB), a physical broadcast channel (PBCH), a SSB/PBCH, etc. may also be included. Here, SS, SSB, PBCH, and SSB/PBCH may collectively be referred to as SSB, and corresponding resource indexes may collectively be referred to as an SSB resource indicator, that is, SSBRI. CSI-RS, SRS, CSI-IM, and other such reference signals further have time-domain characteristics during transmission. The time-domain characteristics include, but are not limited to, aperiodic, periodic, and semi-persistent characteristics, which respectively represent whether transmission of the transmitted reference signals is aperiodic, periodic, or semi-persistent. The periodic reference signal or the semi-persistent reference signal is configured with periodicity and/or slot offset information through high-layer signaling. These two parameters may be jointly encoded (e.g., configured through periodicity And Offset in the high-layer signaling, and by acquiring the parameters, the user can know a transmission cycle of the periodic or semi-persistent reference signal, as well as the transmission slot). In the communication system,resources corresponding to the transmission of the reference signals are referred to as reference signal resources. To save signaling overhead,etc., the plurality of reference signal resources may be divided into a plurality of sets (e.g., a CSI-RS resource set, a CSI-IM resource set, and an SRS resource set). A reference signal resource set includes at least one reference signal resource. A plurality of reference signal resource sets may all originate from the same reference signal resource setting (e.g., CSI-RS resource setting, SRS resource setting, and CSI-IM resource setting, where the CSI-RS resource setting and the CSI-IM resource setting may be merged and both are referred to as CSI-RS resource setting) for configuring parameter information.

In some embodiments, the base station configures measurement resource information, which is used for obtaining channel state information. The measurement resource information includes at least one channel measurement resource (CMR) information and at least one interference measurement resource (IMR) information. The base station configures the measurement resource information within a report config or reporting setting. The at least one CMR information is used for enabling the terminal to measure a channel state of each beam, and the at least one IMR information is used for enabling the terminal to measure interference on each beam.

In some embodiments, artificial intelligence (Al) includes self-learning devices, components, software, and modules, such as machine learning (ML), deep learning, reinforcement learning, transfer learning, deep reinforcement learning, and meta-Learning. In some embodiments, the artificial intelligence is implemented through an artificial intelligence network (or referred to as a neural network). The neural network includes a plurality of layers, and each layer includes at least one node. In an example, the neural network includes an input layer, an output layer, and at least one hidden layer. Each layer of the neural network includes, but is not limited to, using at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block or a resnet block, a densenet block, and a recurrent neural network (RNN). The artificial intelligence network includes a neural network model and/or neural network parameters corresponding to the neural network model, where the neural network model may be referred to as a network model, and the neural network parameters may be referred to as network parameters. One network model defines the architecture of the network, such as the number of layers of the neural network, the size of each layer, an activation function, a connection state, a convolution kernel, a kernel size, a convolution stride, a convolution type (e.g., 1D convolution, 2D convolution, 3D convolution, atrous convolution, transposed convolution, separable convolution, grouped convolution, and dilated convolution). The network parameters represent a weight and/or bias of each layer of the network in the network model and their values. One network model may correspond to a plurality of sets of different neural network parameter values to adapt to different scenarios. The values of the network parameters may be obtained through a method of offline training and/or online training. One neural network model may correspond to a plurality of different neural network parameter values.

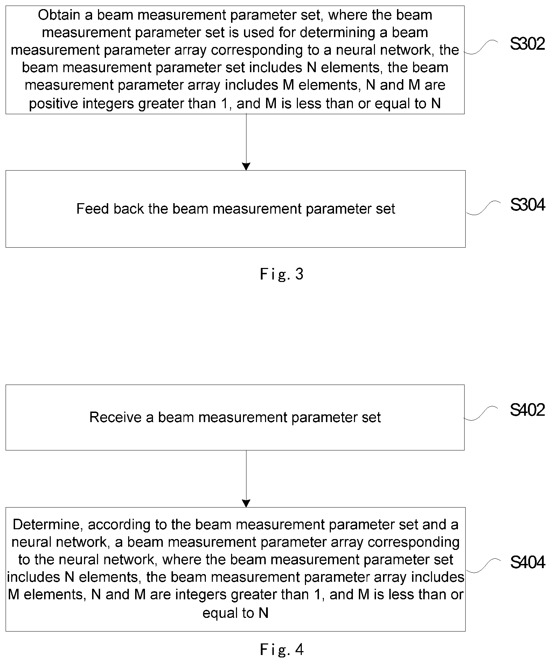

This embodiment provides a beam measurement parameter feedback method. This embodiment of the present disclosure may be operated on the network architecture described above. Fig. 3 is a flowchart of a method according to an embodiment of the present disclosure. As shown in Fig. 3, the process includes the following steps:
Step S302: Obtain a beam measurement parameter set, where the beam measurement parameter set is used for determining a beam measurement parameter array corresponding to a neural network, the beam measurement parameter set includes N elements, the beam measurement parameter array includes M elements, N and M are positive integers greater than 1, and M is less than or equal to N.
Step S304: Feed back the beam measurement parameter set.

In this embodiment, each neural network corresponds to a beam measurement parameter array, and the beam measurement parameter array is an array of elements from the beam measurement parameter set arranged in a specific order. By traversing different arrangements of the beam measurement parameter arrays, the beam measurement parameter array corresponding to the neural network can be found. Therefore, the problem of sorting beam measurement parameters and neural network inputs for different terminals is solved, thereby at least achieving the effect of improving the accuracy of neural network beam prediction.

The embodiments of the present disclosure further provide a beam measurement parameter receiving method. The method may be operated on the network architecture described above. Fig. 4 is a flowchart of a method according to an embodiment of the present disclosure. As shown in Fig. 4, the process includes the following steps:
Step S402: Receive a beam measurement parameter set.
Step S404: Determine, according to the beam measurement parameter set and a neural network, a beam measurement parameter array corresponding to the neural network, where the beam measurement parameter set includes N elements, the beam measurement parameter array includes M elements, N and M are integers greater than 1, and M is less than or equal to N.

In this embodiment, each neural network corresponds to a beam measurement parameter array, and the beam measurement parameter array is an array of elements from the beam measurement parameter set arranged in a specific order. By traversing different arrangements of the beam measurement parameter arrays, the beam measurement parameter array corresponding to the neural network can be found. Therefore, the problem of sorting beam measurement parameters and neural network inputs for different terminals is solved, thereby at least achieving the effect of improving the accuracy of neural network beam prediction.

In an embodiment, after determining the beam measurement parameter array corresponding to the neural network according to the beam measurement parameter set and the neural network, the base station further inputs the beam measurement parameter array into the neural network, outputs beam prediction information from the neural network, and determines a preferred beam pair according to the beam prediction information. Data or information transmission is performed a transmit beam corresponding to the preferred beam pair. The beam prediction information includes, but is not limited to, a group of beam measurement parameters, a group of probability values corresponding to beams, or a group of preferred beam indexes.

In some embodiments, especially during high-frequency transmission, due to a high carrier frequency and a significant path loss, beamforming is required to concentrate energy in the direction of the terminal. Therefore, beam management needs to be used. The beam management includes, but is not limited to, several aspects such as beam scanning, beam tracking, and beam recovery. The core problem to be solved is about how to obtain accurate beam pairs with minimal reference signal resource overhead or signaling overhead. The beam scanning includes transmitting-end beam scanning and/or receiving-end beam scanning. To reduce the overhead of the beam scanning, an AI beam prediction function may be used, that is, only beam measurement parameters corresponding to L0 beams are inputted, beam measurement parameters corresponding to L1 beams are predicted according to these beam measurement parameters, and the L1 beams may include the L0 beams. Each beam may correspond to a beam number direction. L0 and L1 are positive integers, and L1 > L0.

In some embodiments, a beam refers to a transmit beam, a receive beam, precoding, a precoding matrix, a precoding matrix index, a pair of receive and transmit beams, and a pair of transmit and receive beams. The beam may be a type of resource (e.g., transmitting-end precoding, receiving-end precoding, an antenna port, an antenna weight vector, and an antenna weight matrix), and the beam index may be replaced with a resource index because the beam may be transmission-bound to some time-frequency code resources. The beam may also be a transmission (transmitting/receiving) method; and the transmission method may include spatial multiplexing, frequency domain/time domain diversity, etc. The receive beam indication means that a transmitting end may provide an indication through a quasi-co-location indicator (QCL) assumption based on a current reference signal resource (or a reference signal resource index) and an antenna port, as well as a reference signal resource (or a benchmark reference signal resource, or a reference signal resource index) and an antenna port reported by UE feedback. The beam pair is a combination including a transmit beam index and a receive beam index.

In some embodiments, a beam direction or beam angle may include at least one of the following: an angle of arrival (AOA), an angle of departure (AOD), a zenith angle of departure (ZOD), a zenith angle of arrival (ZOA), a vector or vector index constructed from at least one angle of AOA, AOD, ZOD, and ZOA, a discrete Fourier transformation (DFT) vector, a codeword in a codebook, a transmit beam index, a receive beam index, transmit beam group indexes, and receive beam group indexes.

In some embodiments, a beam refers to a spatial filter or a spatial reception/transmission parameter. The spatial filtering may be at least one of the following: a DFT vector, a precoding vector, a DFT matrix, a precoding matrix, a vector composed of a linear combination of a plurality of DFTs, or a vector composed of a linear combination of a plurality of precoding vectors.

In some examples, an AI device configured to predict beam measurement parameters is implemented through a neural network. The beam measurement parameters corresponding to the L0 beams are combined into a beam measurement parameter array (a first beam measurement parameter array) and inputted into the neural network. The neural network outputs a beam measurement parameter array (a second beam measurement parameter array) corresponding to the L1 beams. Preferred beams are determined by the beams corresponding to the K beam measurement parameters with the highest values from the beam measurement parameter array corresponding to the L1 beams. Typically, L1 is greater than L0, both L1 and L0 are positive integers, and K is a positive integer.

In some examples, neural network parameters are obtained through a method of online or offline training. For example, by inputting at least one sample and label, the neural network model is trained to obtain the neural network parameters. In some examples, the sample refers to a first beam measurement parameter array measured by a terminal, and the label refers to a second beam measurement parameter array corresponding to the first beam measurement parameter array measured by the terminal. During network training, the first beam measurement parameter array and the second beam measurement parameter array have a corresponding relationship, preferably a one-to-one correspondence relationship. In a deployment or testing stage of the neural network, the first beam measurement parameter array is inputted into the neural network to output the second beam measurement parameter array. In a specific example, elements of the first beam measurement parameter array and the second beam measurement parameter array are of the same type, such as RSRP, SINR, RSRQ, or BDRPM. In a specific example, elements of the first beam measurement parameter array and the second beam measurement parameter array are of different types. For example, the elements of the first beam measurement parameter array are RSRP, SINR, RSRQ, or BDRPM, while the elements of the second beam measurement parameter array are probability values of predicted beams, or indexes of the predicted beams, etc.

In some examples, transmit beam and/or receive beam indexes are numbered according to a conventional method to form beam indexes. A beam index includes one of the following: a transmit beam index, a receive beam index, and a transmit-receive beam pair index. A beam index corresponds to a beam direction, or the beam direction corresponds to a vector or matrix. The terminal receives a reference signal (e.g., CSI-RS and SS) and measures beam measurement parameters (e.g., L1-RSRP, L1-SINR, and SRQ) corresponding to each beam, thereby forming a beam measurement parameter set. Elements in the beam measurement parameter set are then sorted according to a rule based on beam indexes to obtain a beam measurement parameter array. Typically, the first beam measurement parameter array is a beam measurement parameter array formed by beam measurement parameters corresponding to a first beam set, and the second beam measurement parameter array is a beam measurement parameter array formed by beam measurement parameters corresponding to a second beam set. The first beam set is a subset of the second beam set.

In some examples, it is necessary to normalize the elements in the first beam measurement parameter array to facilitate faster convergence of the neural network. The normalization refers to only normalizing values of elements in an array to a value within a range greater than or equal to and less than or equal to b. In an example, a=-0.5, and b=0.5. In an example, a=0, and b=1.In an example, normalization is achieved by dividing elements in an array by the maximum absolute value among the elements in the array. In an example, normalization is achieved by dividing elements in an array by the variance of the elements in the array. In an example, normalization is achieved by dividing elements in an array by a fixed value (e.g., the maximum value among all elements in all samples). In an example, normalization is achieved by dividing elements in an array by a statistical value (e.g., the statistical variance of all elements in samples). Normalization for index values, such as a beam index, CRI, and SSBRI may be achieved through one-hot encoding.

In some examples, the beam measurement parameter array is a 2-dimensional array, such as a vector. In some examples, the beam measurement parameter array is a two-dimensional array, such as a matrix. In some examples, the beam measurement parameter array is an array greater than two dimensions, such as a tensor. The vector and the matrix may also be viewed as a special case of the tensor.

In some embodiments, a beam measurement parameter is layer 1 reference signal received power (L1-RSRP or RSRP) corresponding to at least one beam. In some embodiments, a beam measurement parameter is a layer 1 signal-to-noise and interference ratio (L1-SINR or SINR) corresponding to at least one beam. In some embodiments, a beam measurement parameter is a reference signal received quality (RSRQ) corresponding to at least one beam. In some embodiments, a beam measurement parameter is a beam angle (at least one of AOA, ZOA, AOD, ZOD, etc., which are sometimes also referred to as a horizontal angle of arrival, a vertical angle of arrival, a horizontal angle of departure, and a vertical angle of departure respectively) corresponding to at least one beam. In some embodiments, a beam measurement parameter is a transmit beam index corresponding to at least one beam. In some embodiments, a beam measurement parameter is a receive beam index corresponding to at least one beam. In some embodiments, a beam measurement parameter is a transmit beam and receive beam pair index (simply referred to as a beam pair index or beam pair) corresponding to at least one beam. In some embodiments, a beam measurement parameter is a beam domain receive power map (BDRPM) corresponding to at least one beam. In some embodiments, a beam measurement parameter is a channel-state information reference signal resource indicator (CSI-RS Resource Indicator, CRI) corresponding to at least one beam. In some embodiments, a beam measurement parameter is a synchronization signals block resource indicator (SSBRI) corresponding to at least one beam. In some embodiments, a beam measurement parameter is a combination of at least two of the following beam measurement parameters corresponding to at least one beam: RSRP, RSRQ, SINR, a beam angle, a transmit beam index, a receive beam index, a beam pair index, CRI, SSBRI, etc. In some embodiments, a beam measurement parameter is a linear value of one of RSRP, RSRQ, and SINR. In some embodiments, a beam measurement parameter is a logarithmic or decibel (DB) value of one of RSRP, RSRQ, and SINR.

In some embodiments, RSRP, SINR, or RSRQ is measured based on CSI-RS. In some embodiments, RSRP, SINR, or RSRQ is measured based on SSB. In an example, a beam measurement parameter is measured based on SRS resources. In an example, a beam measurement parameter is measured based on at least one channel measurement resource and at least one interference measurement resource.

In an example, the base station includes at least one transmitting panel, and each panel has 4 rows and 8 columns of antenna elements, corresponding to transmit beams (Txbeam)of Nt=32; and the terminal includes receive panels of Npr=2, and each panel includes 2 rows and 4 columns of antenna elements, corresponding to receive beams (Rxbeam) of Nr=8, which totally correspond to beam pairs of N=2(panel) * 8(Rxbeam) * 32(Tx beam) = 512. For each beam pair, a corresponding beam measurement parameter (e.g., RSRP) may be obtained by receiving a reference signal resource corresponding to the beam pair. However, in practice, if reference signal resources corresponding to 512 beams are transmitted during beam scanning every time, the overhead of the reference signal resources is excessively large. There is a method for predicting beam measurement parameters (e.g., RSRP) of all N beams through one beam subset of beams of N=512, namely M beams. According to the beam measurement parameters (e.g., RSRP), preferred receive beams and/or transmit beams are determined. For example, beams corresponding to K maximum RSRP values in the beam measurement parameter array are selected as preferred beams. Nr, Nt, N, and M may be other positive integers. Data or signal transmission is performed by using at least one beam from the K preferred beams. The beams include transmit beams and/or receive beams. N, M, and K are all integers, where K ≥ 1, M ≥ K, and N > M. RSRP may be replaced with other beam measurement parameters, such as at least one of RSRQ, SINR, BDRPM, a beam angle, etc.

In some examples, the base station or terminal may select M beams from N beams. The base station only transmits reference signal resources corresponding to the M beams, and the terminal obtains beam measurement parameters by receiving the reference signal resources corresponding to the M beams, combines the beam measurement parameters in a certain order to form a beam measurement parameter array, and inputs the normalized beam measurement parameter array into the neural network to obtain a beam measurement parameter array including N elements. Beams corresponding to K maximum beam measurement parameters (e.g., RSRP, SINR, and RSRQ) from the beam measurement parameters in the beam measurement parameter array including the N elements are selected as preferred beams. The beams include transmit beams and/or receive beams. The base station or terminal uses at least one beam from the K preferred beams for data or signal transmission. K, M, and N are all positive integers, where M < N.

In some examples, the base station or terminal may select M beams from N beams. The base station only transmits reference signal resources corresponding to the M beams, and the terminal obtains beam measurement parameters by receiving the reference signal resources corresponding to the M beams, and combines the beam measurement parameters into a beam measurement parameter set, where the beam measurement parameter set may be stored in the form of an array, dictionary, or set. The beam measurement parameter set is fed back to the base station. The base station receives the beam measurement parameter set. The base station sorts elements in the beam measurement parameter set in a certain order to obtain an i^{th} beam measurement parameter array Ci, inputs the normalized beam measurement parameter array Ci into the neural network to obtain a beam measurement parameter array including N elements, selects a maximum beam measurement parameter Rᵢ (Rᵢ may be one of RSRP, SINR, and RSRQ) from the beam measurement parameters in the beam measurement parameter array, and compares the beam measurement parameter Rᵢ with an optimal beam measurement parameter R₀ fed back by the terminal. If an absolute value of a difference between Rᵢ and R₀ is less than a set threshold, it is considered that the sorting of Ci matches the beam measurement parameter array inputted into the current neural network. In an example, Rᵢ may also be compared, where i=1,...,Nₘₐₓ. A beam measurement parameter array corresponding to the maximum Rᵢ is selected as a beam measurement parameter array matches the current neural network input. The selected beam measurement parameter array matching the current neural network input is inputted into the neural network, and a beam measurement parameter array including N elements is outputted. Beams corresponding to K maximum beam measurement parameters (e.g., RSRP, SINR, and RSRQ) from the beam measurement parameters in the outputted beam measurement parameter array are selected as preferred beams. The beams include transmit beams and/or receive beams. The base station or terminal uses at least one beam from the K preferred beams for data or signal transmission. K, M, and N are all positive integers, where M < N. Here, i=1,...,Nₘₐₓ. Nₘₐₓ represents the agreed or configured maximum number of times of traversal.

In some examples, the terminal or base station evenly selects M beams at equal intervals from N beams. In some examples, the terminal selects, from the N beams, M1 beams at equal intervals from a horizontal dimension and M2 beams at equal intervals from a vertical dimension, where M1 * M2 = M. In some examples, the terminal or base station selects M1 beams at equal intervals only from the transmit beams while does not select from the receive beams, the number of the receive beams is Nr, and Nr * M1 = M. In some examples, the terminal selects M beams from N beams through an artificial intelligence or machine learning method according to a channel environment. In this case, the terminal needs to feed back indexes of the selected M beams to the base station. In some examples, the base station selects M beams from N beams through an artificial intelligence or machine learning method according to a channel environment. In this case, signaling needs to be transmitted to inform the terminal of the indexes of the selected M beams. In some examples, it is also possible to only specify a start beam based on the beam index and a beam interval to select M beams from the start beam at equal beam intervals. The beams include transmit beams and/or receive beams.

In some embodiments, the N beams correspond to D reference signal resources, and the M beams correspond to E reference signal resources. The base station transmits the E reference signal resources, where the E reference signal resources belong to a subset of the D reference signal resources, and all the E reference signal resources belong to the same reference signal resource set. The terminal receives the E reference signal resources, obtains M beam measurement parameters, and combines the M beam measurement parameters into a beam measurement parameter array in a certain order. In an example, M = E * R, R is the actual number of receive beams used, and N = D * R1, where R1 is the total number of beams at the terminal, and D is the number of transmit beams. M, N, D, E, R, and R1 are positive integers, where N > M, and D > E.

In some specific examples, assume that the base station includes at least one transmitting panel, and each panel has 4 rows and 8 columns of antenna elements, corresponding to transmit beams (Txbeam)of Nt=32; and the terminal includes receive panels of Npr=2, and each panel includes 2 rows and 4 columns of antenna elements, corresponding to receive beams (Rxbeam) of Nr=8, which totally correspond to beam pairs of N=2(panel) * 8(Rxbeam) * 32(Tx beam) = 512. Based on this assumption, some specific beam selection methods can be obtained as follows:
In a specific example, all panels and Rxbeams are selected on the UE side, 1/2 of Txbeams are selected on the base station side, and beam pairs of a total of 2(panel) * 8(Txbeam) * 16(Txbeam) = 256 are selected. That is, beams corresponding to a Txbeam index being [1, 3, 6, 8, 9, 11, 14, 16, 17, 19, 22, 24, 25, 27, 30, 32] or [2, 4, 5, 7, 10, 12, 13, 15, 18, 20, 21, 23, 26, 28, 29, 31] are selected.

In a specific example, all panels and Rxbeams are selected on the UE side, 1/4 of Txbeams are selected on the base station side, and beam pairs of a total of 2(panel) * 8(Txbeam) * 8(Txbeam) = 64 are selected. That is, beams corresponding to one of Txbeam indexes being [1, 3, 9, 11, 17, 19, 25, 27], [2, 4, 10, 12, 18, 20, 26, 28], [5, 7, 13, 15, 21, 23, 29, 31], and [6, 8, 14, 16, 21, 23, 29, 32] are selected.

In a specific example, all panels and Rxbeams are selected on the UE side, 1/8 of Txbeams are selected on the base station side, and beam pairs of a total of 2(panel) * 8(Txbeam) * 8(Txbeam) = 64 are selected. That is, beams corresponding to one of Txbeam indexes being [1, 3, 17, 19], [2, 4, 18, 20], [5, 7, 21, 23], [6, 8, 22, 24], [9, 11, 25, 27], [10, 12, 26, 28], [13, 15, 29, 31], and[14, 16, 30, 32] are selected.

In a specific example, on the UE side, all panels are selected, and half of Rxbeams are selected, that is, either the odd-indexed or even-indexed receive beams are selected. On the base station side, 1/4 of Txbeams are selected.Beam pairs of a total of 2(panel) * 4(Txbeam) * 8(Tx beam) = 64 are selected. That is, beams corresponding to one of Txbeam indexes being [1, 3, 9, 11, 17, 19, 25, 27], [2, 4, 10, 12, 18, 20, 26, 28], [5, 7, 13, 15, 21, 23, 29, 31], and [6, 8, 14, 16, 21, 23, 29, 32] are selected.

It should be noted that the selections here are merely some specific implementation examples, and the method included in the solution may also have other selection solutions. Other solutions may also be obtained by adding some beam index offsets based on the following solutions.

In some examples, beam measurement parameters corresponding to selected M beams are obtained, and combined in a certain order to form a beam measurement parameter array. In a specific example, for example, all 512 beams may be arranged in a certain order into a single column. For example, if there are a total of 512 beam pairs, the sorting process includes traversing Txbeams first, then traversing Rxbeams, and finally traversing panels. A specific number corresponding relationship is exemplified as following Table 1:

**Table 1**

| Beam pair number | panel | Rxbeam | Txbeam |
|---|---|---|---|
| 1 | 1 | 1 | 1 |
| 2 | 1 | 1 | 2 |
| 3 | 1 | 1 | 3 |
| ... | | | |
| 32 | 1 | 1 | 32 |
| 33 | 1 | 2 | 1 |
| 34 | 1 | 2 | 2 |
| ... | | | |
| 256 | 1 | 8 | 32 |
| 257 | 2 | 1 | 1 |
| 258 | 2 | 1 | 2 |
| ... | | | |
| 512 | 2 | 8 | 32 |

In some examples, from the N beam indexes, starting from S as a beam pair number, M beams are selected at equal intervals to form a one-dimensional beam measurement parameter array. In some examples, further, the M beams may be subjected to array transformation and converted into a two-dimensional array with M1 rows and M2 columns. For example, one arrangement of beam indexes for M=64, M1=16, and M2=4 is shown in Table 2 below:

**Table 2**

| Row and column number | Column 1 | Column 2 | Column 3 | Column 4 |
|---|---|---|---|---|
| Row 1 | panel=1 | panel=1 | panel=1 | panel=1 |
| | Rxbeam= 1 | Rxbeam= 1 | Rxbeam=1 | Rxbeam=1 |
| | Txbeam= 1 | Txbeam= 3 | Txbeam=17 | Txbeam=1 9 |
| Row 2 | panel=1 | panel=1 | panel=1 | panel=1 |
| | Rxbeam= 2 | Rxbeam= 2 | Rxbeam=2 | Rxbeam=2 |
| | Txbeam= 1 | Txbeam= 3 | Txbeam=17 | Txbeam=1 9 |
| ... | ... | | | |
| Row 8 | panel=1 | panel=1 | panel=1 | panel=1 |
| | Rxbeam= 8 | Rxbeam= 8 | Rxbeam=8 | Rxbeam=8 |
| | Txbeam= 1 | Txbeam= 3 | Txbeam=17 | Txbeam=1 9 |
| Row 9 | panel=2 | panel=2 | panel=2 | panel=2 |
| | Rxbeam= 1 | Rxbeam= 1 | Rxbeam=1 | Rxbeam=1 |
| | Txbeam= 1 | Txbeam= 3 | Txbeam=17 | Txbeam=1 9 |
| Row 10 | panel=2 | panel=2 | panel=2 | panel=2 |
| | Rxbeam= 2 | Rxbeam= 2 | Rxbeam=2 | Rxbeam=2 |
| | | | Txbeam=17 | Txbeam=1 |
| | Txbeam= 1 | Txbeam= 3 | | 9 |
| ... | ... | | | |
| Row 16 | panel=2 | panel=2 | panel=2 | panel=2 |
| | Rxbeam= 8 | Rxbeam= 8 | Rxbeam=8 | Rxbeam=8 |
| | Txbeam= 1 | Txbeam= 3 | Txbeam=17 | Txbeam=1 9 |

It should be noted that in some examples, there may be other value assignment methods for M1 and M2. The M beam indexes may also be directly sorted as needed to obtain other two-dimensional beam measurement parameter arrays. In some examples, a three-dimensional beam measurement parameter array may also be constructed. For example, each receive beam on each receive panel corresponds to a two-dimensional array. A first dimension of the three-dimensional beam measurement parameter array represents a vertical beam index, and a second dimension of the three-dimensional beam measurement parameter array represents a horizontal beam index. Beam indexes corresponding to the receive beam and panel correspond to a third dimension of the three-dimensional beam measurement parameter array.

In an embodiment, the terminal includes T types of terminals. For each type of terminal, a beam sorting index may differ, or the understanding of the beam may vary. For example, the first type of terminal performs sorting according to the panel ID, and beams within each panel are sorted according to the size of the beam index. For some terminals, an i^{th} beam of a panel 1 is first arranged, and then an i^{th} beam of a panel 2 is arranged, where i=1, ..., M1. Although some terminals all have M beams, corresponding beam angles are A₁ to A_{M}. Although some terminals all have M beams, corresponding beam angles are B₁ to B_{M}. In addition, different terminals may have beams of different widths. Therefore, the wireless system needs to classify the terminals into T categories, and the system corresponds to at least T sets of neural network parameters. Each set of neural network parameters is bound to a type of terminal. In an example, this binding may be agreed upon. For example, each set of neural network parameters may be assigned with an index, called a neural network index, and each type of user has a terminal type index, referred to as a terminal type index. The neural network indexes and the terminal type indexes are in one-to-one association. In an example, the configuration may also be performed by the base station. According to channel scenarios, statistical characteristics, or a traversing method, the base station associates the neural network indexes with the terminal type indexes in a one-to-one manner and transmits an association relationship between the neural network indexes and the terminal type indexes to the terminal. Signaling for transmitting the association relationship between the neural network indexes and the terminal type indexes may be high-layer signaling and/or physical layer signaling. The terminal determines its appropriate neural network parameters by receiving the association relationship between the neural network indexes and the terminal type indexes transmitted by the base station. In an example, the terminal determines its type according to the arrangement of beams and feeds back the terminal type index to the base station. The base station determines neural network parameters suitable for the terminal according to the terminal type index fed back by the terminal. Signaling for feeding back the association relationship of the terminal type index may be high-layer signaling and/or physical layer signaling.

In an example, the terminal needs to feed back beam sorting information corresponding to the terminal to the base station. In an example, the terminal needs to feed back a beam angle range and/or beam angle interval corresponding to the beams to the base station. Based on the received beam angle range and/or beam angle interval, the base station determines the terminal type of the terminal, or beam angle information, etc. In an example, the terminal needs to feed back a rotation angle based on a beam angle reference point to the base station, where the beam angle reference point includes, but is not limited to, one of true north, true south, true east, true west, or another agreed-upon angle. After receiving the rotation angle based on the beam angle reference point, the base station rotates a standard beam so as to adapt to the terminal. The standard beam is a beam generated by the base station according to an agreement or protocol or default method, and is used to train neural network parameters.

In some embodiments, the terminal includes at least two beam sets: a first beam set and a second beam set. The first beam set is agreed upon or configured by the base station for the terminal, and includes corresponding beams used by the base station or the terminal to train neural network parameters. The second beam set is another beam set except for the first beam set. In an example, for example, the first beam set includes beams with beam indexes from 1 to N, while the second beam set includes beams with beam indexes from N+1 to Nₖ, where Nₖ is an integer greater than N. In an example, the terminal determines, through the first beam set and the neural network, a beam0 and a beam measurement parameter RSRPO corresponding to the beam0, and feeds back the beam0 and/or the beam measurement parameter RSRPO corresponding to the beam0. In an example, the terminal receives reference signal resources corresponding to the beams in the second beam set and calculates, according to the reference signal resources corresponding to the beams in the second beam set, a set of all beam measurement parameters corresponding to the beams in the second beam set. The set of all beam measurement parameters corresponding to the beams in the second beam set is fed back. In an example, the base station receives the beam0.In an example, the base station receives the beam measurement parameter RSRPO corresponding to the beam0.

In an example, the base station receives the set of all beam measurement parameters corresponding to the beams in the second beam set. The set of all beam measurement parameters corresponding to the beams in the second beam set is combined into Nₘₐₓ beam measurement parameter arrays. Each beam measurement parameter array is inputted into the neural network to respectively output Nₘₐₓ beam measurement parameters including N elements. A maximum value Ri of an i^{th} beam measurement parameter array of the Nₘₐₓ beam measurement parameter arrays is determined, and the beam measurement parameter array with maximum Ri is selected as a preferred beam measurement parameter array suitable for the neural network, where i=1,... ,Nₘₐₓ. The preferred beam measurement parameter array is inputted into the neural network, and a beam measurement parameter array including N elements is outputted. A terminal index in the beam measurement parameter array corresponding to the maximum beam measurement parameter RSRP1 is found as an optimal beam index beam 1. RSRP1 and RSRPO are compared to determine the larger one as a final optimal beam and a beam measurement parameter corresponding to the optimal beam. Here, Nₘₐₓ represents the maximum number of beam measurement parameter arrays that can be traversed. The Nₘₐₓ beam measurement parameter arrays have the same elements and number of elements, but differ only in the ordering of the elements.

In some embodiments, both the terminal and the base station include N beams (or beam pairs). The terminal receives reference signal resources corresponding to the N beams and obtains, according to the reference signal resources, beam measurement parameters for a reference signal corresponding to each beam. The maximum value from the N beam measurement parameters is determined as RSRPO, and the beam corresponding to the maximum beam measurement parameter is beam0. In an example, the terminal feeds back the RSRPO. In an example, the terminal feeds back the beam0. In an example, the terminal and the base station select N1 beams from N beams. The N1 beams may be selected from the N beams at uniform intervals or selected using an artificial intelligence or machine learning method. Here, N1 and N are positive integers, and N1<N. In an example, the terminal receives reference signal resources corresponding to the N1 beams and calculates, according to the reference signal resources corresponding to the N1 beams, a set of all beam measurement parameters corresponding to the N1 beams. The set of all beam measurement parameters corresponding to the N1 beams is fed back. In an example, the base station receives the beam0. In an example, the base station receives the beam measurement parameter RSRPO corresponding to the beam0. In an example, the base station receives the set of all beam measurement parameters corresponding to the N1 beams. The set of all beam measurement parameters corresponding to the N1 beams is combined into at least N2 beam measurement parameter arrays. Each beam measurement parameter array is respectively inputted into the neural network to output N2 beam measurement parameters. The beam measurement parameter array corresponding to the maximum beam measurement parameter RSRP1 from the N2 beam measurement parameters is determined as a correct beam ordering for the terminal. A terminal index in the beam measurement parameter array corresponding to the maximum beam measurement parameter RSRP1 is found as an optimal beam index beam 1. RSRP1 and RSRPO are compared to determine the larger one as a final optimal beam and a beam measurement parameter corresponding to the optimal beam. Here, N2 represents the maximum number of beam measurement parameter arrays that can be traversed. The N2 beam measurement parameter arrays have the same elements and number of elements, but differ only in the ordering of the elements.

In an example, the base station receives the set of all beam measurement parameters corresponding to the N1 beams. The set of all beam measurement parameters corresponding to the N1 beams is combined into at least N2 beam measurement parameter arrays. Each beam measurement parameter array is respectively inputted into the neural network to output N2 beam measurement parameters. The beam measurement parameter RSRP1 of the N2 beam measurement parameters that is closest to RSRPO is determined. The beam measurement parameter array C1 corresponding to the beam measurement parameter RSRP1 that is closest to RSRPO is found, and an index in the corresponding beam measurement parameter array is an optimal beam index beam1. Here, N2 represents the maximum number of beam measurement parameter arrays possibly traversed. The N2 beam measurement parameter arrays have the same elements and number of elements, but differ only in the ordering of the elements. In an example, the base station instructs the terminal with an arrangement order of elements in the beam measurement parameter array C1 corresponding to the beam measurement parameter RSRP1 that is closest to RSRPO. In an example, the terminal receives the arrangement order of the elements in the beam measurement parameter array C1, and sorts the measured beam measurement parameters according to the arrangement order of the elements in the beam measurement parameter array C1 so as to perform feedback to the base station during subsequent feedback.

In some embodiments, both the terminal and the base station include N beams (or beam pairs). The terminal receives reference signal resources corresponding to the N beams and obtains, according to the reference signal resources, N beam measurement parameters for reference signals corresponding to the N beams, where each beam measurement parameter corresponds to a beam index (e.g., CRI and SSBRI). In an example, the reference signal resources corresponding to the N beams belong to the same measurement process. In an example, the reference signal resources corresponding to the N beams belong to the same measurement configuration or measurement configuration set. In an example, the reference signal resources corresponding to the N beams belong to the same reference signal resource setting. In an example, the terminal feeds back the N beam indexes (e.g., CRI and SSBRI) through L reports. In an example, the terminal feeds back the N beam measurement parameters through L reports. In an example, the terminal feeds back the N beam indexes (e.g., CRI and SSBRI) and N beam measurement parameters through L reports. Here, N is a positive integer. L is a positive integer, and preferably, L is greater than 1. In an example, the L reports belong to the same report group, where reports belonging to the same report group belong to the same report config. In an example, the L reports are transmitted at different times. In an example, the base station obtains the N beam indexes by receiving the L reports. In an example, the base station obtains the N beam measurement parameters by receiving the L reports. In an example, the base station obtains the N beam indexes and the N beam measurement parameters by receiving the L reports. In an example, among the L reports, the beams within the same report have the same receive beam, or the beam measurement parameter corresponds to the same receive beam. In an example, among the L reports, the beams within the same report have the same transmit beam, or the beam measurement parameter corresponds to the same transmit beam. In an example, the base station arranges and combines the N measurement parameters in different ways to form N1 beam measurement parameter arrays through the received N beam measurement parameters, traverses the outputs of the N1 beam measurement parameter arrays in the neural network, and finds, from output results, the beam measurement parameter array corresponding to the optimal beam measurement parameter so as to determine an optimal beam arrangement method. The base station may use the N CRls to traverse and find possible beam index orders for the terminal.

According to the descriptions in the foregoing implementations, those skilled in the art can clearly know that the method according to the above embodiments may be implemented by software and necessary universal hardware platforms, and certainly may also be implemented by hardware, but the former is a preferred implementation in many cases. Based on such understanding, the technical solution of the present disclosure essentially or parts making contribution to the prior art may be embodied in the form of a software product. A computer software product is stored in a storage medium (e.g., a ROM/RAM, a disk, and a compact disc), which includes a plurality of instructions used for enabling one terminal device (e.g., a mobile phone, a computer, a server, or a network device) to perform the method according to various embodiments of the present disclosure.

This embodiment further provides a beam measurement parameter feedback apparatus. The apparatus is configured to implement the foregoing embodiments and preferred implementations, which are not repeated due to previous introduction. The term "module" used as below may implement combination of software and/or hardware with preset functions. Apparatuses described in the following embodiments are preferably implemented by the software, but it is possible and conceivable for implementing the apparatuses through the hardware or combination of the software and the hardware.

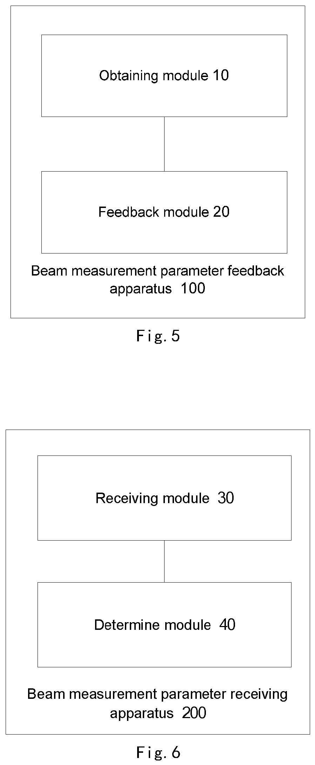

Fig. 5 is a structural block diagram of a beam measurement parameter feedback apparatus according to an embodiment of the present disclosure. As shown in Fig. 5, the apparatus 100 is located at a first communication node. The apparatus includes an obtaining module 10 and a feedback module 20.

The obtaining module 10 is configured to obtain a beam measurement parameter set, where the beam measurement parameter set is used for determining a beam measurement parameter array corresponding to a neural network, the beam measurement parameter set includes N elements, the beam measurement parameter array includes M elements, N and M are positive integers greater than 1, and M is less than or equal to N.

The feedback module 20 is configured to feed back the beam measurement parameter set.

According to another embodiment of the present disclosure, a beam measurement parameter receiving apparatus is provided. As shown in Fig. 6, the apparatus 200 is located at a second communication node. The apparatus includes a receiving module 30 and a determine module 40.

The receiving module 30 is configured to receive a beam measurement parameter set.

The determine module 40 is configured to determine, according to the beam measurement parameter set and a neural network, a beam measurement parameter array corresponding to the neural network, where the beam measurement parameter set includes N elements, the beam measurement parameter array includes M elements, N and M are integers greater than 1, and M is less than or equal to N.

It should be noted that the above modules may be implemented through the software or hardware, and for the latter, the modules may be implemented by following methods including but not limited to: the above modules are all located in the same processor; or the above modules are respectively located in different processors in the form of any combination.

The embodiments of the present disclosure further provide a computer-readable storage medium having a computer program stored therein, where the computer program is configured to perform the steps in any above method embodiment when operated.

In an exemplary embodiment, the above computer-readable storage medium may include, but is not limited to: a U disk, a read-only memory (ROM for short), a random access memory (RAM for short), a mobile hard disk, a magnetic disk, a compact disc, or other media capable of storing computer programs.

The embodiments of the present disclosure further provide an electronic apparatus including a memory and a processor. The memory stores a computer program, and the processor is configured to operate the computer program so as to perform the steps in any above method embodiment.

In an exemplary embodiment, the above electronic apparatus may further include a transmission device and an input and output device. The transmission device is connected with the above processor, and the input and output device is connected with the above processor.

For specific examples in this embodiment, reference may be made to the examples described in the above embodiments and exemplary implementations, which will not be described in detail in this embodiment.

Obviously, those skilled in the art should understand that the modules or steps in the embodiments of the present disclosure may be implemented through a general-purpose computing device, which may be concentrated on a single computing device or distributed over a network formed by a plurality of computing devices, and may be implemented by executable program code of the computing device, such that the modules or steps may be stored in a storage apparatus to be performed by the computing device; and in some cases, the shown or described steps may be performed in a different order than presented here, or the modules or steps may be made into various integrated circuit modules, or more of the modules or steps may be made into a single integrated circuit module to be implemented. Thus, the present disclosure is not limited to any specific hardware and software combination.

The foregoing descriptions are merely preferred embodiments of the present disclosure, but are not set to limit the present disclosure. Those skilled in the art may make various modifications and variations to the present disclosure. Any modification, equivalent replacement, improvement, etc., made within the principle of the present disclosure shall fall within the scope of protection of the present disclosure.

## Claims

1. A beam measurement parameter feedback method, comprising:
obtaining a beam measurement parameter set, wherein the beam measurement parameter set is used for determining a beam measurement parameter array corresponding to a neural network, the beam measurement parameter set comprises N elements, the beam measurement parameter array comprises M elements, N and M are positive integers greater than 1, and M is less than or equal to N; and
feeding back the beam measurement parameter set.

2. The method according to claim 1, wherein the beam measurement parameter set comprises at least one beam measurement parameter, and the beam measurement parameter comprises at least one of the following: reference signal received power corresponding to a beam, a reference signal signal-to-noise ratio corresponding to the beam, a reference signal received quality corresponding to the beam, a beam angle, a beam index, a beam domain receive power map, channel state information corresponding to the beam, and a synchronization signal block resource indicator corresponding to the beam.

3. The method according to claim 1, wherein the beam measurement parameter is a normalized beam measurement parameter.

4. The method according to claim 1, wherein the beam measurement parameter array is an array of elements from the beam measurement parameter set arranged in a preset order.

5. The method according to claim 1, wherein the neural network corresponds to K sets of neural network parameters, each set of neural network parameters corresponds to a beam measurement parameter array, and K is positive integer.

6. The method according to claim 5, wherein before feeding back the beam measurement parameter set, the method further comprises:
receiving a neural network parameter indicator, and determining a first communication node type according to the neural network parameter indicator.

7. The method according to claim 6, further comprising:
feeding back a beam measurement parameter array according to the first communication node type.

8. The method according to claim 1, wherein the beam measurement parameter set comprises a first beam measurement parameter subset and a second beam measurement parameter subset.

9. The method according to claim 1, wherein the first beam measurement parameter subset corresponds to a first beam set, the second beam measurement parameter subset corresponds to a second beam set, the first beam set is used for training the neural network parameters, and the second beam set is a beam set except for the first beam set.

10. The method according to claim 8, wherein the first beam measurement parameter subset comprises a beam measurement parameter, and the second beam measurement parameter subset comprises N-1 beam measurement parameters.

11. The method according to claim 8, wherein the first beam measurement parameter subset comprises a predicted beam measurement parameter.

12. The method according to claim 8, wherein the first beam measurement parameter subset comprises a traversed maximum beam measurement parameter.

13. The method according to claim 1, wherein the feeding back the beam measurement parameter set comprises:
feeding back the beam measurement parameter set by L reports, wherein the L reports belong to the same report group, and L is a positive integer.

14. A beam measurement parameter receiving method, comprising:
receiving a beam measurement parameter set; and
determining, according to the beam measurement parameter set and a neural network, a beam measurement parameter array corresponding to the neural network, wherein the beam measurement parameter set comprises N elements, the beam measurement parameter array comprises M elements, N and M are integers greater than 1, and M is less than or equal to N.

15. The method according to claim 14, further comprising:
determining, according to a beam measurement parameter array corresponding to the neural network and the neural network, P beam measurement parameters, and P is an integer greater than or equal to 1; or,
determining preferred Q beams according to a beam measurement parameter array corresponding to the neural network and the neural network, wherein Q is a positive integer.

16. The method according to claim 14, further comprising:
normalizing the beam measurement parameters to obtain normalized beam measurement parameters.

17. The method according to claim 14, wherein the beam measurement parameter array is an array of elements from the beam measurement parameter set arranged in a preset order.

18. The method according to claim 14, wherein the neural network corresponds to K sets of neural network parameters, each set of neural network parameters corresponds to a beam measurement parameter array, and K is positive integer.

19. The method according to claim 18, further comprising:
transmitting at least one set of the neural network parameters to a first communication node, such that the fist communication node determines a beam measurement parameter array corresponding to the neural network parameters.

20. The method according to claim 14, wherein the beam measurement parameter set comprises a first beam measurement parameter subset and a second beam measurement parameter subset.

21. The method according to claim 14, wherein the first beam measurement parameter subset corresponds to a first beam set, the second beam measurement parameter subset corresponds to a second beam set, the first beam set is used for training the neural network parameters, and the second beam set is a beam set except for the first beam set.

22. The method according to claim 14, wherein the first beam measurement parameter subset comprises a beam measurement parameter, and the second beam measurement parameter subset comprises N-1 beam measurement parameters.

23. The method according to claim 14, wherein the first beam measurement parameter subset comprises a predicted beam measurement parameter.

24. The method according to claim 14, wherein the first beam measurement parameter subset comprises a traversed maximum beam measurement parameter.

25. The method according to claim 14, further comprising:
determining an i^{th} beam measurement parameter array according to the beam measurement parameter set;
inputting the i^{th} beam measurement parameter array into the neural network and outputting an i^{th} second beam measurement parameter array Mi; and
obtaining a maximum value Ci from Mi, i=1, ..., C, C being a positive integer greater than 1, and determining a beam measurement parameter array corresponding to the maximum value of Ci as a beam measurement parameter array corresponding to the neural network;
or, obtaining a maximum value Ci from Mi, i=1, ..., C, C being a positive integer greater than 1, calculating a distance value Di between Ci and a set beam measurement parameter Ro, and determining a beam measurement parameter array corresponding to a minimum value of the distance value Di as a beam measurement parameter array corresponding to the neural network.

26. The method according to claim 14, wherein the receiving a beam measurement parameter set comprises:
receiving N beam measurement parameters of the beam measurement parameter set by receiving L reports, wherein the L reports belong to the same report group, and L is a positive integer.

27. A beam measurement parameter feedback apparatus, located at a first communication node, comprising:
an obtaining module, configured to obtain a beam measurement parameter set, wherein the beam measurement parameter set is used for determining a beam measurement parameter array corresponding to a neural network, the beam measurement parameter set comprises N elements, the beam measurement parameter array comprises M elements, N and M are positive integers greater than 1, and M is less than or equal to N; and
a feedback module, configured to feed back the beam measurement parameter set.

28. A beam measurement parameter receiving apparatus, located at a second communication node, comprising:
a receiving module, configured to receive a beam measurement parameter set; and
a determine module, configured to determine, according to the beam measurement parameter set and a neural network, a beam measurement parameter array corresponding to the neural network, wherein the beam measurement parameter set comprises N elements, the beam measurement parameter array comprises M elements, N and M are integers greater than 1, and M is less than or equal to N.

29. A computer-readable storage medium, having a computer program stored therein, wherein the computer program is configured to, when executed by a processor, implement the steps of the method as claimed in any one of claims 1 to 13, or implement the steps of the method as claimed in any one of claims 14 to 25.

30. An electronic apparatus, comprising a memory, a processor, and a computer program stored on the memory, wherein the processor is configured to execute the computer program to implement the steps of the method as claimed in any one of claims 1 to 13, or the steps of the method as claimed in any one of claims 14 to 25.
